# EUROPÄISCHE PATENTSCHRIFT

(11) **EP 3 851 726 B1**
(45) Veröffentlichungstag und Bekanntmachung des Hinweises auf die Patenterteilung: **18.12.2024**
(21) Anmeldenummer: 20305040.6
(22) Anmeldetag: 17.01.2020
(51) Int. Cl.: F16L 59/065, F16L 59/14, F16L 59/18, F17C 6/00

(54) **JOHNSTON-KUPPLUNG MIT ZUSÄTZLICHER VAKUUMHÜLLE**
JOHNSTON COUPLING WITH AN ADDITIONAL VACUUM COVER
EMBRAYAGE JOHNSTON POURVU D'ENVELOPPE À VIDE SUPPLÉMENTAIRE

(43) Veröffentlichungstag der Anmeldung: 21.07.2021
(73) Patentinhaber: Nexans, 92400 Courbevoie (FR)
(72) Erfinder: SCHULZ, Holger, 30167 Hannover (DE); FROHNE, Christian, 30657 Hannover (DE)
(74) Vertreter: Ipsilon

(56) Entgegenhaltungen:
- CN-A- 102 606 821
- JP-A- S5 983 891
- JP-A- S60 220 297

## Beschreibung

### Gebiet

Die Erfindung betrifft eine Steckkupplung für vakuumisolierte flexible Leitungen, die auch unter dem Begriff "Johnston-Kupplung" bekannt ist. Insbesondere betrifft die Erfindung eine Johnston-Kupplung mit zusätzlicher Vakuumhülle.

### Hintergrund

Tiefkalte Medien, die auch als kryogene Flüssigkeiten bezeichnet werden, werden häufig auf Schiffen, in Tankwaggons oder auf Tanklastwagen transportiert. Ein wichtiges Beispiel hierfür ist flüssiges Erdgas (LNG), das eine Verdampfungstemperatur von -162 °C (111 K) hat. Die Verladung wird typischerweise mit nicht-isolierten Leitungen und Kupplungen durchgeführt, die während der Verladung vereisen. Die fehlende Wärmeisolierung führt zur Verdampfung eines Teils des tiefkalten Mediums, was mit einem Energieverlust einhergeht, denn das verdampfte Medium muss an anderer Stelle mit hohem Energieaufwand wieder verflüssigt werden.

Bei der Verladung noch kälterer Medien, zum Beispiel flüssigem Wasserstoff (Verdampfungstemperatur -253 °C, 20 K) oder flüssigem Helium (Verdampfungstemperatur -269 °C, 4 K) würde an der Oberfläche von nicht-isolierten Leitungen und Kupplungen der Sauerstoff in der Umgebungsluft kondensieren, dessen Verdampfungstemperatur vergleichsweise höher ist (-183 °C; 90 K). Das ist höchst unerwünscht, weil durch flüssigen Sauerstoff eine potentielle Brandgefahr erheblich steigt.

Darüber hinaus sind für den Transport von solchen kryogenen Flüssigkeiten oder Medien auch vakuumisolierte Leitungen bekannt, die beispielsweise von der Firma Nexans hergestellt werden. Für Tank- und Verladezwecke sind die vakuumisolierten Leitungen flexibel ausgebildet und an einem Ende mit einer sogenannten Johnston-Kupplung ausgerüstet, mittels der zwei kryogene Leitungen verbindbar sind, ohne dass an der Verbindungsstelle die Wärmeisolierung verloren geht. Dadurch werden eine Vereisung der Kupplungsstelle und Verluste des kryogenen Mediums durch Verdampfung verringert. Eine Johnston-Kupplung ist beispielsweise in der EP 1 957 851 B1 offenbart.

Einfach ausgedrückt werden bei einer Johnston-Kupplung zwei doppelwandige vakuumisolierte Rohrleitungen ineinandergesteckt. Die Innendurchmesser solcher Rohrleitungen betragen typischerweise zwischen 20 mm und 150 mm. Grundsätzlich sind aber auch kleinere oder größere Innendurchmesser möglich. Das männliche Teil (innere doppelwandige Rohrleitung) wird in das weibliche Teil (äußere doppelwandige Rohrleitung) gesteckt. Man spricht auch von Kupplungsstecker und Kupplungsdose. Dadurch wird die äußere Oberfläche sehr gut zum inneren medienführenden Rohr wärmeisoliert. Hierfür müssen beide doppelwandige Rohrleitungen über eine vorbestimmte Länge ineinandergesteckt werden. Je nach Medium und gewünschter Wärmeisolierung liegen typische Rohr-in-Rohr-Längen im Bereich von 200 mm bis 600 mm. Abweichungen zu kleineren oder größeren Längen sind bei einzelnen Anwendungsfällen möglich.

Wegen der vergleichsweise großen Rohr-in Rohr-Längen ist das Einführen des männlichen in den weiblichen Kupplungsteil nicht einfach, weil die Kryoleitung mit dem männlichen Kupplungsstecker ein erhebliches Gewicht aufweist und außerdem der Kupplungsstecker möglichst nicht im Innenbereich der Kupplungsdose entlang schleifen soll, um Beschädigungen der Oberfläche zu vermeiden.

Um diese Schwierigkeiten zu adressieren, schlägt die europäische Patentanmeldung EP 3 670 999 A1 eine Johnston-Kupplung mit einer linearen Verschiebeeinheit vor. Die Verschiebeeinheit ist eine mechanische Hilfseinrichtung, die das Einführen des Kupplungsstecker das in die Kupplungsdose erleichtert.

Die CN 102 606 821 A offenbart eine Steckkupplung zwischen zwei vakuumisolierten Kryoleitungen, wobei eine Kupplungsdose einen Ringspalt zur Aufnahme eines Kupplungssteckers aufweist. Eine medienführende Leitung im Inneren der Steckkupplung ist durch mehrere Vakuumlagen gegenüber der Außenwelt isoliert. Kupplungsdose und -stecker werden mittels Flanschen verbunden, in deren Bereich eine Dichtung angeordnet ist.

Hiervon ausgehend hat die vorliegende Erfindung die Aufgabe, eine Steckkupplung für vakuumisolierte Kryoleitungen zu schaffen, welche die oben genannten Probleme löst oder zumindest verbessert.

### Zusammenfassung der Erfindung

Zur Lösung dieser Aufgabe schlägt die Erfindung nach einem ersten Aspekt eine Steckkupplung zum Verbinden einer ersten mit einer zweiten doppelwandigen vakuumisolierten Kryoleitung vor, die jeweils ein medienführendes Innenrohr (307,336) aufweisen. Die Steckkupplung umfasst einen Kupplungsstecker und eine Kupplungsdose. Der Kupplungsstecker weist ein inneres und ein äußeres Rohrstück sowie einen ersten Verbindungsflansch auf und ist mit der ersten Kryoleitung verbunden. Die Kupplungsdose weist ein inneres und ein äußeres Rohrstück sowie einen zweiten Verbindungsflansch auf und ist mit der zweiten Kryoleitung verbunden. Das äußere Rohrstück der Kupplungsdose ist an dem zweiten Verbindungsflansch angeschweißt. Das von dem Verbindungflansch abliegende Ende des äußeren Rohrstückes ist mittels eines Verbindungsringes mit einem Ende des inneren Rohrstückes der Kupplungsdose vakuumdicht verbunden. Zwischen dem inneren und dem äußeren Rohrstück der Kupplungsdose ist ein im Bereich des zweiten Verbindungsflansches offener Ringspalt gebildet, der sowohl an seinem Innenumfang als auch an seinem Außenumfang von einem Isoliervakuum umgeben ist. Das andere Ende des inneren Rohrstückes ist an einem Dichtungshalter angeschweißt. Das medienführende Innenrohr der zweiten Kryoleitung ist ebenfalls an dem Dichtungshalter angeschweißt. Der Dichtungshalter trägt eine Dichtung, welche im zusammengebauten Zustand der Steckkupplung mit dem Kupplungsstecker in Kontakt ist und die medienführenden Innenrohre der ersten bzw. zweiten Kryoleitung abdichtet.

Die an den Innenumfang und Außenumfang des offenen Ringspaltes angrenzenden Isoliervakua verbessern die thermische Isolierung der Steckkupplung. Einfach gesprochen wird durch die vorgeschlagene Konstruktion erreicht, dass der Weg verlängert wird, den von außen in die Steckkupplung eindringende Wärme zurücklegen muss, bevor die Wärme eine medienführende Leitung erreicht. Bei einer bestimmten Länge einer Steckkupplung wird dadurch eine verbesserte Wärmeisolierung im Vergleich zu herkömmlichen im Stand der Technik bekannten Johnston-Kupplungen erzielt. Umgekehrt kann die erfindungsgemäße Steckkupplung im Vergleich zu einer herkömmlichen Johnston-Kupplung kürzer gebaut werden, um ein vergleichbares Niveau von Wärmeisolierung zu erreichen. Die kürzere Bauform der Steckkupplung hat Vorteile in der Handhabung, insbesondere dann, wenn der Kupplungsstecker in die Kupplungsdose einzuführen ist. Die kürzere Bauweise erleichtert das Einführen des männlichen in den weiblichen Kupplungsteil, ist platzsparender und die Abdichtung ist aufgrund der sich geringer auswirkenden Winkel Toleranz einfacher.

In der praktischen Anwendung hat es sich daher als zweckmäßig erwiesen, wenn bei zusammengebauter Steckkupplung der Kupplungsstecker in den offenen Ringspalt eingesteckt ist.

Mit Vorteil sind das äußere und das innere Rohrstück des Kupplungssteckers jeweils mit einem ersten Ende mit dem ersten Verbindungflansch und mit dem jeweils zweiten Ende mit einem Verbindungsring verbunden. Zwischen dem inneren und dem äußeren Rohrstück ist ein Ringspalt ausgebildet, in welchem ein Isoliervakuum herrscht. Das Isoliervakuum in dem Kupplungsstecker leistet einen Beitrag zur Wärmeisolierung der Steckkupplung insgesamt.

In der praktischen Anwendung hat es sich daher als zweckmäßig erwiesen, wenn bei zusammengebauter Steckkupplung der Kupplungsstecker in den offenen Ringspalt eingesteckt ist.

Mit Vorteil sind das äußere und das innere Rohrstück des Kupplungssteckers jeweils mit einem ersten Ende mit dem ersten Verbindungflansch und mit dem jeweils zweiten Ende mit einem Verbindungsring. Zwischen dem inneren und dem äußeren Rohrstück ist ein Ringspalt ausgebildet, in welchem ein Isoliervakuum herrscht. Das Isoliervakuum in dem Kupplungsstecker leistet einen Beitrag zur Wärmeisolierung der Steckkupplung insgesamt.

Gemäß einer vorteilhaften Weiterbildung ist der Ringspalt über mindestens einen Strömungskanal mit einem Isoliervakuum in der ersten Kryoleitung verbunden. In der Regel wird das Isoliervakuum der Kryoleitung ohnehin gepumpt, sodass keine zusätzlichen Maßnahmen erforderlich sind, um das Isoliervakuum in dem Kupplungsstecker zu erzeugen.

Gemäß einer zweckmäßigen Weiterbildung ist der zweite Verbindungsflansch mit einem Außenrohr der zweiten Kryoleitung verbunden.

Das innere Rohrstück kann mit dem äußeren Rohrstück der Kupplungsdose mittels eines Verbindungsrings verbunden ist. Der Verbindungsring schließt einen Ringspalt zwischen dem inneren und dem äußeren Rohrstück der Kupplungsdose ab, der auf seiner anderen Seite offen ist, um den Kupplungsstecker aufzunehmen.

Bei einer Weiterbildung der erfindungsgemäßen Steckkupplung weisen die Kupplungsdose und der Kupplungsstecker zueinander komplementäre Zentriermittel auf. Die Zentriermittel sorgen dafür, dass der Kupplungsstecker richtig zentriert in der Kupplungsdose sitzt.

Bei einer besonders vorteilhaften Ausführungsform der Steckkupplung sind die Innenrohre der ersten und zweiten Kryoleitung im Bereich der Steckverbindung gegenüber dem Außenraum durch drei übereinandergeschichtete Isoliervakua thermisch isoliert, wobei "übereinandergeschichtet" in dem Sinne zu verstehen ist, dass drei jeweils voneinander abgegrenzte Räume die Isoliervakua begrenzen. Die abgegrenzten Räume liegen in radialer Richtung betrachtet übereinander.

Nach einem zweiten Aspekt der Erfindung wird eine Verladeeinrichtung für kryogene Fluide mit einer Steckkupplung gemäß dem ersten Aspekt der Erfindung vorgeschlagen. Die Verladeeinrichtung verwirklicht alle Vorteile, die im Zusammenhang mit der Steckkupplung beschrieben wurden.

### Kurze Beschreibung der Zeichnung

Nachfolgend wird die Erfindung anhand zweier Ausführungsbeispiele unter Bezugnahme auf die begleitenden Figuren exemplarisch näher erläutert. Alle Figuren sind rein schematisch und nicht maßstäblich. Es zeigen:
- Fig. 1: eine schematische Querschnittsdarstellung einer herkömmlichen Steckkupplung im getrennten Zustand;
- Fig. 2: die Steckkupplung aus Figur 1 im zusammengebauten Zustand;
- Fig. 3: eine schematische Querschnittsdarstellung einer erfindungsgemäßen Steckkupplung im getrennten Zustand; und
- Fig. 4: die Steckkupplung aus Figur 3 im zusammengebauten Zustand.

Gleiche oder ähnliche Elemente sind in den Figuren mit gleichen oder ähnlichen Bezugszeichen versehen.

### Ausführungsbeispiel

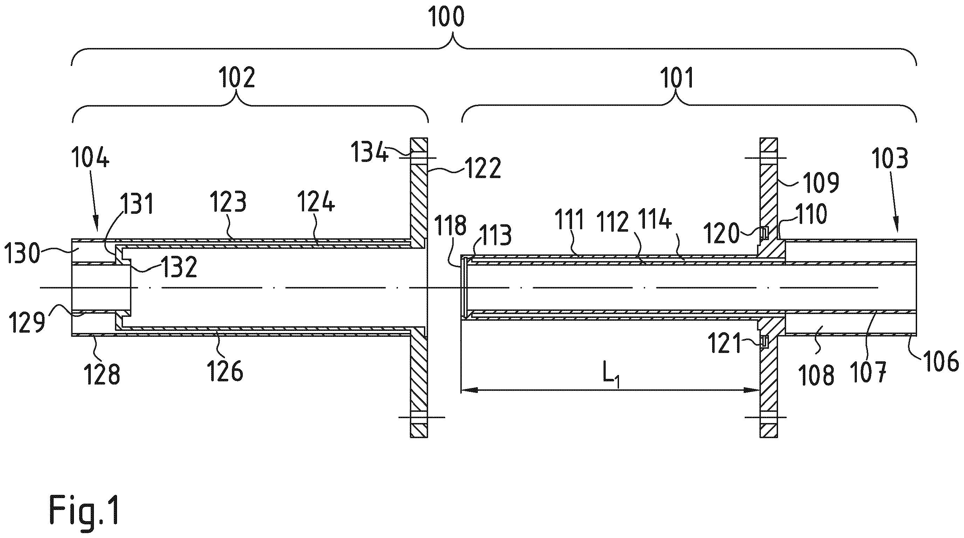

Figur 1 zeigt eine herkömmliche Steckkupplung, die als Ganzes mit dem Bezugszeichen 100 bezeichnet ist. Zu der Steckkupplung 100 gehören ein Kupplungsstecker 101 und eine Kupplungsdose 102, die in Figur 1 vor dem Zusammenbau und mit einem kleinen Abstand voneinander dargestellt sind.

Der Kupplungsstecker 101 ist mit einer ersten Kryoleitung 103 und die Kupplungsdose 102 mit einer zweiten Kryoleitung 104 verbunden. Die erste Kryoleitung 103 weist ein Außenrohr 106 sowie ein Innenrohr 107 auf, die durch einen Zwischenraum 108 voneinander getrennt und durch ein Isoliervakuum in dem Zwischenraum 108 thermisch voneinander isoliert sind. Die Kryoleitungen 103,104 sind doppelwandige vakuumisolierte Kryoleitungen.

Der Kupplungsstecker 101 umfasst einen ersten Verbindungsflansch 109, ein äußeres Rohrstück 111 sowie ein inneres Rohrstück 112. Das Außenrohr 106 der ersten Kryoleitung 103 ist an einem Vorsprung 110 des ersten Verbindungsflansches 109 angeschweißt. Auf der gegenüberliegenden Hauptfläche des Verbindungsflansches 109 ist das äußere Rohrstück 111 an den ersten Verbindungsflansch 109 angeschweißt. Ein von dem ersten Verbindungsflansch 109 entferntes distales Ende 113 des äußeren Rohrstückes 111 ist mit dem inneren Rohrstück 112 verbunden, das sich zu dem ersten Verbindungsflansch 109 hin erstreckt und mit dem Innenrohr 107 der ersten Kryoleitung 103 verbunden ist. Zwischen dem äußeren Rohrstück 111 und dem inneren Rohrstück 112 ist ein Ringspalt 114 ausgebildet. Der Zwischenraum 108 ist mit dem Ringspalt 114 strömungsmäßig verbunden, sodass sich das Isoliervakuum bis in den Ringspalt 114 hinein erstreckt und für eine gute thermische Isolierung des inneren Rohrstückes 112 sorgt.

An dem distalen Ende 113 der Steckkupplung 101 ist das äußere Rohrstück 111 etwas länger als das innere Rohrstück 112 und bildet einen überstehenden Rand 117, der eine kreisringförmige Dichtung 118 haltert, die an dem distalen Ende 113 der Steckkupplung 101 anliegt. Die Dichtung 118 ist beispielsweise aus einem elektrisch isolierenden Material hergestellt, zum Beispiel aus Polytetrafluorethylen (PTFE) oder Torlon^{®}. Bei anderen Ausführungsformen ist die Dichtung 118 aus elektrisch leitendem Material hergestellt. In dem ersten Verbindungsflansch 109 ist eine Ringnut 120 eingestochen, in die eine Dichtung 121 eingesetzt ist. Die Dichtung 121 im warmen Bereich der Steckkupplung sorgt dafür, dass kein verdampftes Medium entweicht, auch wenn die Dichtung 118 die Steckkupplung nicht vollständig abdichtet. Der Abstand zwischen der Dichtung 118 und dem ersten Verbindungflansch 109 wird im Folgenden auch als Länge L₁ der Steckkupplung 101 bezeichnet.

Die Kupplungsdose 102 weist einen zweiten Verbindungsflansch 122, ein äußeres Rohrstück 123 und ein inneres Rohrstück 124 auf. Die Rohrstücke 123,124 sind jeweils mit einem Ende an dem zweiten Verbindungsflansch 122 angeschweißt, wobei zwischen den Rohrstücken 123,124 wiederum ein Ringspalt 126 ausgebildet ist. Die jeweils anderen Enden der Rohrstücke 123,124 sind mit der zweiten Kryoleitung 104 verbunden. Die zweite Kryoleitung weist ein Außenrohr 128 und ein Innenrohr 129 auf. Zwischen dem Außenrohr 128 und dem Innenrohr 129 ist ein Zwischenraum 130 gebildet, in dem ein Isoliervakuum herrscht, welches das Innenrohr 129 thermisch isoliert. Das Außenrohr 128 der zweiten Kryoleitung 104 ist mit dem äußeren Rohrstück 123 und das Innenrohr 129 mit dem inneren Rohrstück 124 der Kupplungsdose 102 über einen Verbindungsring 131 verbunden. Der Zwischenraum 130 steht strömungsmäßig mit dem Ringspalt 126 in Verbindung. Das Isoliervakuum erstreckt sich bis in den Ringspalt 126 der Kupplungsdose 102 hinein und sorgt für eine gute thermische Isolierung des inneren Rohrstückes 124 der Kupplungsdose 102.

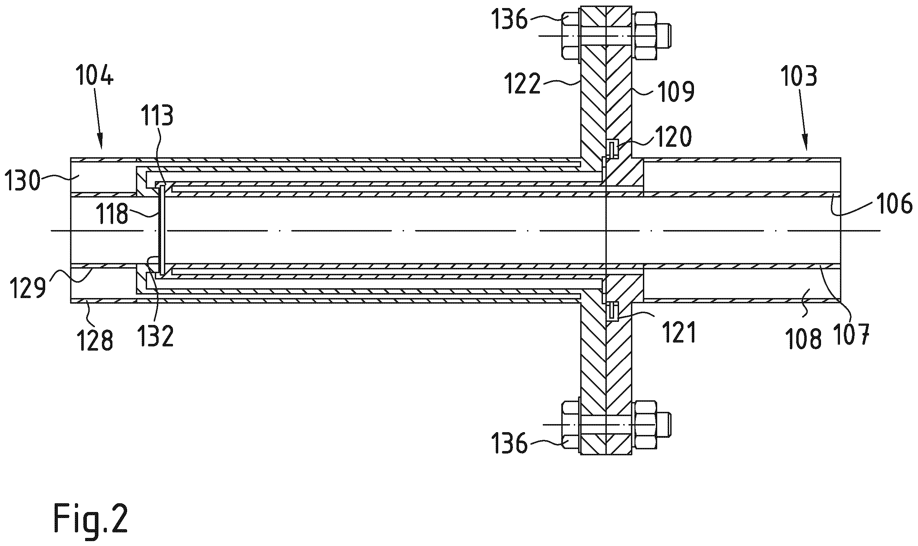

An dem Verbindungsring 131 ist ein ringförmiger Sitz 132 für die Dichtung 118 ausgebildet, die an dem Sitz 132 anliegt, wenn der Kupplungsstecker 101 vollständig in die Kupplungsdose 102 eingesteckt ist (Figur 2).

Figur 2 zeigt die Steckkupplung 100 aus Figur 1 in einem zusammengebauten Zustand, in welchem der erste und der zweite Verbindungsflansch 109,122 mittels Befestigungsschrauben 136 aufeinandergepresst sind. Das distale Ende 113 des Kupplungssteckers 101 drückt die Dichtung 118 auf den Sitz 132 der Kupplungsdose 102. Die Dichtung 118 dichtet dabei den Übergang zwischen dem Kupplungsstecker 101 und der Kupplungsdose 102 ab. Da sich die Dichtung 118 im Betrieb der Steckkupplung in Kontakt mit tiefkalten Medien befindet, ist eine 100-prozentige Dichtigkeit unter Umständen nicht gewährleistet. Falls tiefkaltes Medium an der Dichtung 118 vorbei in einen Zwischenraum zwischen dem äußeren Rohr 111 des Kupplungsstecker 101 und dem inneren Rohr 124 der Kupplungsdose 102 eindringt und dort verdampft, dann verhindert die Dichtung 121, die im warmen Bereich des ersten bzw. zweiten Verbindungsflansches 109,122 angeordnet ist, dass verdampftes Medium aus der Steckkupplung in die Umgebung austritt. Bei entzündlichen Medien, wie zum Beispiel flüssigem Erdgas oder flüssigem Wasserstoff, ist das in höchstem Grade unerwünscht.

Die medienführenden inneren Rohre 112, 124 der Steckkupplung 100 sind durch die Isoliervakua gut gegenüber der äußeren Oberfläche der Steckkupplung isoliert. Ein Wärmeübergang findet jedoch insbesondere dort statt, wo das innere Rohr 112 mit dem äußeren Rohr 111 der Steckkupplung 101 verbunden ist sowie dort, wo das innere Rohr 124 mit dem äußeren Rohr 123 der Kupplungsdose 102 verbunden ist. Von außen eindringende Wärme muss den Weg entlang der Länge des vakuumisolierten Bereichs der Steckkupplung 100 zurücklegen, um das in den inneren Rohren der Steckkupplung geführte Medium zu erreichen. Aus diesem Grund ist die thermische Isolierung bei der Steckkupplung 100 umso besser, je länger die Steckkupplung ausgebildet ist. Aber mit zunehmender Länge der Steckkupplung 100 wird deren Handhabung immer schwieriger. In anderen Worten: Im Interesse einer guten thermischen Isolierung sollte die Steckkupplung so lang wie möglich und im Interesse einer einfachen Handhabung so kurz wie möglich sein. In der Praxis verwirklichte Steckkupplungen stellen regelmäßig einen Kompromiss zwischen die diesen gegensätzlichen Anforderungen dar.

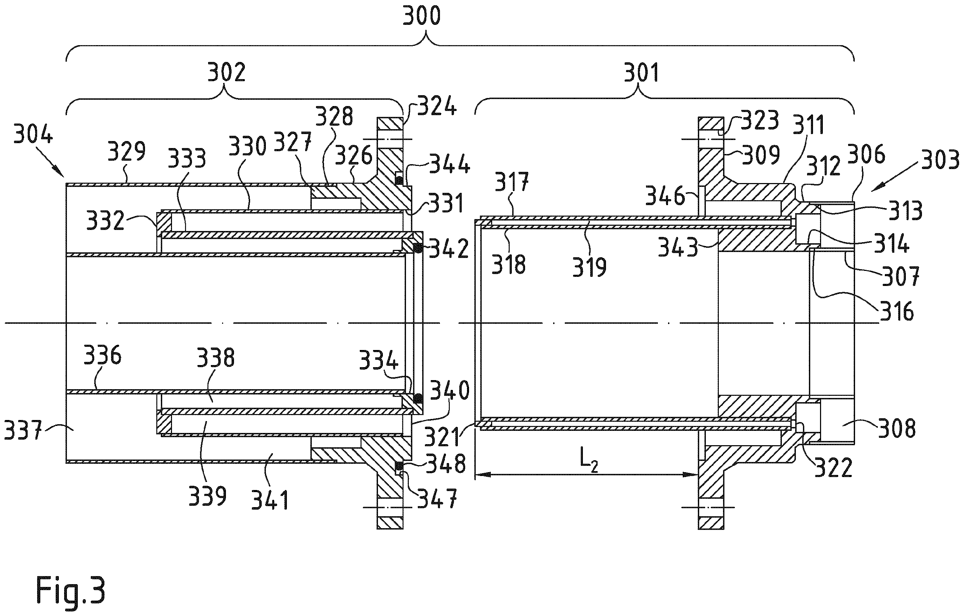

In Figur 3 ist ein Ausführungsbeispiel einer erfindungsgemäßen Steckkupplung 300 schematisch und im Querschnitt dargestellt. Die Steckkupplung 300 weist einen Kupplungsstecker 301 und eine Kupplungsdose 302 auf, die in Figur 3 vor dem Zusammenbau und mit einem kleinen Abstand voneinander dargestellt sind.

Der Kupplungsstecker 301 ist mit einer ersten Kryoleitung 303 und die Kupplungsdose 302 mit einer zweiten Kryoleitung 304 verbunden. Die erste Kryoleitung 303 weist ein Außenrohr 306 sowie ein Innenrohr 307 auf, die durch einen Zwischenraum 308 voneinander getrennt und durch ein Isoliervakuum in dem Zwischenraum 308 thermisch voneinander isoliert sind. Die Kryoleitungen 303,304 sind doppelwandige vakuumisolierte Kryoleitungen.

Der Kupplungsstecker umfasst einen ersten Verbindungsflansch 309, der in einen zylindrischen Anschlussbereich 311 übergeht. Der Anschlussbereich 311 ist mit einem umlaufenden äußeren Anschlussstutzen 312 verbunden, auf dessen Außenumfang eine Aufnahme 313 für das Außenrohr 306 der Kryoleitung 303 ausgebildet ist. Das Außenrohr 306 ist an dem Anschlussstutzen 312 angeschweißt. Weiterhin weist der Anschlussbereich 311 einen umlaufenden inneren Anschlussstutzen 314 auf, auf dessen Innenumfang eine Aufnahme 316 für das Innenrohr 307 der Kryoleitung 303 ausgebildet ist. Das Innenrohr 307 ist an dem Anschlussstutzen 314 ebenfalls angeschweißt.

An dem Anschlussbereich 311 ist auf der Seite, die der Kryoleitung 303 gegenüber liegt, ein äußeres Rohrstück 317 und ein inneres Rohrstück 318 angeschweißt, wobei das äußere Rohrstück 317 und das innere Rohrstück 318 in radialer Richtung voneinander beanstandet sind, sodass sich ein Ringspalt 319 zwischen dem äußeren Rohrstück 317 und dem inneren Rohrstück 318 bildet. An dem von dem Anschlussbereich 311 abliegenden Ende sind das äußere Rohrstück 317 und das innere Rohrstück mittels eines Verbindungsringes 321 vakuumdicht miteinander verbunden. Der Ringspalt 319 steht über mindestens einen Strömungskanal 322 mit dem Zwischenraum 308 der ersten Kryoleitung 303 strömungsmäßig in Verbindung, sodass in dem Ringspalt 319 auch ein Isoliervakuum herrscht. Für die Montage des Kupplungssteckers 301 auf der Kupplungsdose 302 sind Durchgangslöcher 323 für Befestigungsschrauben (nicht dargestellt) vorgesehen.

Die Kupplungsdose 302 weist einen zweiten Verbindungsflansch 324 auf, der in einen Anschlussbereich 326 übergeht. Der Anschlussbereich 326 ist mit einem umlaufenden äußeren Anschlussstutzen 327 verbunden, auf dessen Außenumfang eine Aufnahme 328 für ein Außenrohr 329 der Kryoleitung 304 ausgebildet ist. Das Außenrohr 329 ist an dem Anschlussstutzen 327 angeschweißt.

Ein äußeres Rohrstück 330 der Kupplungsdose 302 ist in einer zentralen Öffnung 331 des zweiten Verbindungsflansches 324 angeschweißt. Mittels eines Verbindungsringes 332 ist das von dem Verbindungflansch 324 abliegenden Ende des äußeren Rohrstückes 330 mit einem inneren Rohrstück 333 der Kupplungsdose vakuumdicht verbunden. Das andere Ende des inneren Rohrstückes 333 ist in einer Aufnahme auf dem Außenumfang eines Dichtungshalters 334 angeschweißt. Ein Innenrohr 336 der zweiten Kryoleitung 304 ist an einem inneren Umfang des Dichtungshalters 334 angeschweißt.

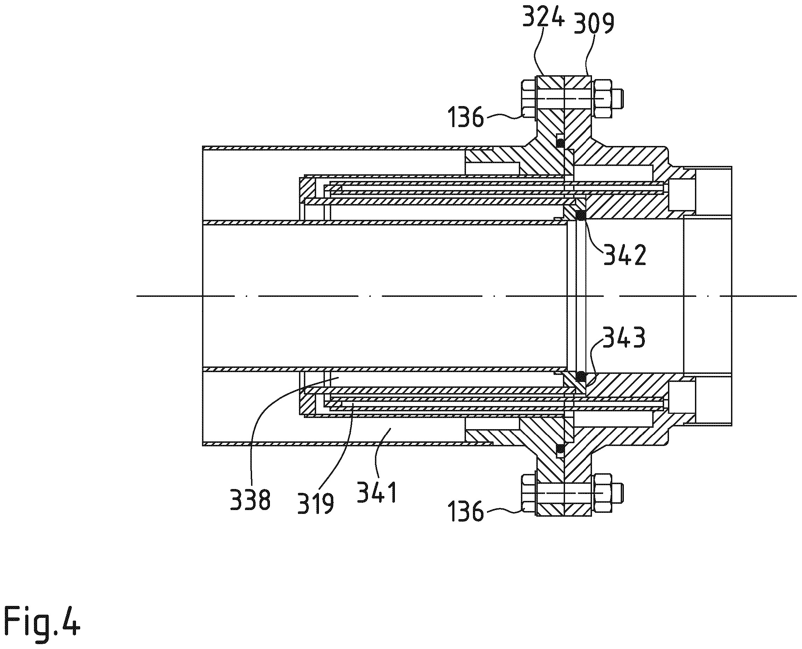

Das Außenrohr 329 und das Innenrohr 336 der zweiten Kryoleitung 304 begrenzen einen Zwischenraum 337, in welchem ein Isoliervakuum herrscht. Zwischen dem inneren Rohrstück 333 der Kupplungsdose 302 und dem Innenrohr 336 der Kryoleitung 304 ist ein Ringspalt 338 gebildet, der strömungsmäßig mit dem Zwischenraum 337 in Verbindung steht. Dementsprechend herrscht auch in dem Ringspalt 338 Isoliervakuum. Zwischen dem äußeren Rohrstück 330 und dem inneren Rohrstück 333 ist ein Ringspalt 339 gebildet, der auf der einen Seite von dem Verbindungsring 332 abgeschlossen und auf der anderen Seite im Bereich des zweiten Verbindungsflansches 324 offen ist und auf diese Weise eine kreisringförmige Einführöffnung für den Kupplungsstecker 301 bildet. In einem Ringraum 341, der sich um den Ringspalt 339 herum erstreckt, herrscht ebenfalls Isoliervakuum. An einer dem Kupplungsstecker zugewandten Stirnseite ist auf dem Dichtungshalter 334 eine Dichtung 342 angeordnet, die im zusammengebauten Zustand der Steckkupplung 300 auf einem Sitz 343 in dem Kupplungsstecker 301 anliegt und die medienführenden Innenrohre 307,336 der ersten bzw. zweiten Kryoleitung 303,304 abdichtet (Figur 4).

An dem zweiten Verbindungflansch 324 ist ein ringförmiger Vorsprung 344 ausgebildet, der in eine entsprechende Ausnehmung 346 in dem ersten Verbindungflansch 309 des Kupplungssteckers 301 passt. Der Abstand zwischen dem Verbindungsring 321 und dem ersten Verbindungsflansch 309 entspricht der Länge L₂ des Kupplungssteckers 301.

Der zweite Verbindungsflansch 324 weist außerdem eine Ringnut 347 auf, in die eine Dichtung 348 aufgenommen ist. Die Dichtung 348 verhindert, dass verdampftes Medium aus der Steckkupplung 300 austritt, falls die Dichtung 342 die Innenrohre 307,336 nicht vollständig abdichtet.

Figur 4 zeigt die Steckkupplung 300 in einem zusammengebauten Zustand, in welchem die Verbindungsflansche 309 und 324 mittels Verbindungbefestigungsschrauben 136 aufeinandergepresst sind. Der ringförmige Vorsprung 344 ist in der Ausnehmung 346 aufgenommen und zentriert den Kupplungsstecker 301 auf der Kupplungsdose 302. Der ringförmige Vorsprung 344 und die Ausnehmung 346 bilden zueinander komplementäre Zentriermittel. Bei anderen Ausführungsbeispielen können auch andere Zentriermittel vorgesehen sein. Der Kupplungsstecker 301 ist vollständig in die Kupplungsdose 302 eingesteckt, sodass die Dichtung 342 an dem Sitz 343 in dem Kupplungsstecker anliegt und die Innenrohre 306,336 abdichtet. Im Bereich der Steckkupplung 300 liegen somit drei Schichten von Isoliervakua übereinander. Das sind in radialer Richtung von innen nach außen gesehen der Ringspalt 338 in der Kupplungsdose 302, der Ringspalt 319 in dem Kupplungsstecker 301 und der Ringraum 341 in der Kupplungsdose 302. Im Falle der Steckkupplung 300 ist daher der Weg, den von außen eindringende Wärme zurücklegen muss, ungefähr doppelt so lang wie die Länge L₂ der Steckkupplung 301. Bei gleicher Länge der Steckkupplung 300 ist deren Wärmeisolierung im Vergleich zu der in Figur 2 gezeigten Steckkupplung 100 besser.

Umgekehrt ist es bei einer vorgegebenen Wirkung einer Wärmeisolierung eine Steckkupplung 300 kürzer als eine Steckkupplung 100 auszubilden, was durch unterschiedliche Längen L₁ bzw. L₂ der den Figuren 1 und 3 dargestellten Kupplungsstecker 101 bzw. 301 veranschaulicht ist, wobei L₁ ungefähr um das 1,3-fache länger als L₂ ist. Bei anderen Ausführungsbeispielen können die Längenverhältnisse auch anders sein.

Die kürzere Baulänge der Steckkupplung 300 vereinfacht deren Handhabung. Außerdem ist die Kupplung 300 platzsparend und die Abdichtung im Bereich der Dichtung 342 ist aufgrund der sich geringer auswirkenden Winkeltoleranz einfacher, weil die Dichtung 342 weniger von einer optimalen Lage auf den Sitz 343 abweicht, wenn der Kupplungsstecker 301 nicht genau konzentrisch in die Kupplungsdose 302 eingesteckt wird.

### Bezugszeichenliste

| | | | |
|---|---|---|---|
| 100 | Steckkupplung | 306 | Außenrohr |
| 101 | Kupplungsstecker | 307 | Innenrohr |
| 102 | Kupplungsdose | 308 | Zwischenraum |
| 103 | erste Kryoleitung | 309 | erster Verbindungflansch |
| 104 | zweite Kryoleitung | 311 | Anschlussbereich |
| 106 | Außenrohr | 312 | Äußerer Anschlussstutzen |
| 107 | Innenrohr | 313 | Aufnahme |
| 108 | Zwischenraum | 314 | Innerer Anschlussstutzen |
| 109 | erster Verbindungsflansch | 316 | Aufnahme |
| 111 | äußeres Rohrstück | 317 | Äußeres Rohr |
| 112 | inneres Rohrstück | 318 | Inneres Rohr |
| 113 | distales Ende | 319 | Ringspalt |
| 114 | Ringspalt | 321 | Verbindungsring |
| 117 | Überstehender Rand | 322 | Strömungskanal |
| 118 | Dichtung | 323 | Durchgangslöcher |
| 120 | Ringnut | 324 | zweiter Verbindungflansch |
| 121 | Dichtung | 326 | Anschlussbereich |
| 122 | zweiter Verbindungflansch | 327 | Äußerer Anschlussstutzen |
| 123 | äußeres Rohrstück | 328 | Aufnahme |
| 124 | Inneres Rohrstück | 329 | Außenrohr |
| | | 330 | äußeres Rohr |
| 126 | Ringspalt | 331 | Zentrale Öffnung |
| 128 | Außenrohr | 332 | Verbindungsring |
| 129 | Innenrohr | 333 | Inneres Rohr |
| 130 | Zwischenraum | 334 | Dichtungshalter |
| 131 | Verbindungsring | 336 | Innenrohr |
| 132 | Sitz | 337 | Zwischenraum |
| | | 338 | Ringspalt |
| 300 | Steckkupplung | 339 | offener Ringspalt |
| 301 | Kupplungsstecker | 340 | Einführöffnung |
| 302 | Kupplungsdose | 341 | Ringraum |
| 303 | erste Kryoleitung | | |
| 304 | zweite Kryoleitung | 342 | Dichtung |

## Patentansprüche

1. Steckkupplung zum Verbinden einer ersten mit einer zweiten doppelwandigen vakuumisolierten Kryoleitung (303,304), die jeweils ein medienführendes Innenrohr (307,336) aufweisen, wobei die Steckkupplung (300) einen Kupplungsstecker (301) und eine Kupplungsdose (302) umfasst,
- wobei der Kupplungsstecker (301) ein inneres und ein äußeres Rohrstück (318,317) sowie einen ersten Verbindungsflansch (309) aufweist und mit der ersten Kryoleitung (303) verbunden ist,
- wobei die Kupplungsdose (302) ein inneres und ein äußeres Rohrstück (333,330) sowie einen zweiten Verbindungsflansch (324) aufweist und mit der zweiten Kryoleitung (304) verbunden ist,
wobei das äußere Rohrstück (330) der Kupplungsdose (302) an dem zweiten Verbindungsflansch (324) angeschweißt und das von dem Verbindungflansch (324) abliegende Ende des äußeren Rohrstückes (330) mittels eines Verbindungsringes (332) mit einem Ende des inneren Rohrstückes (333) der Kupplungsdose vakuumdicht verbunden ist,
wobei zwischen dem inneren und dem äußeren Rohrstück (333,330) der Kupplungsdose (302) ein im Bereich des zweiten Verbindungsflansches (324) offener Ringspalt (339) gebildet ist, der sowohl an seinem Innenumfang als auch an seinem Außenumfang von einem Isoliervakuum (338,341) umgeben ist, **dadurch gekennzeichnet, dass**
das andere Ende des inneren Rohrstückes (333) an einem Dichtungshalter (334) angeschweißt ist, dass
das medienführende Innenrohr (336) der zweiten Kryoleitung (304) an dem Dichtungshalter (334) angeschweißt ist und dass
der Dichtungshalter (334) eine Dichtung (342) trägt, welche im zusammengebauten Zustand der Steckkupplung (300) mit dem Kupplungsstecker (301) in Kontakt ist und die medienführenden Innenrohre (307,336) der ersten bzw. zweiten Kryoleitung (303,304) abdichtet.

2. Steckkupplung nach Anspruch 1, **dadurch gekennzeichnet, dass** bei zusammengebauter Steckkupplung (300) der Kupplungsstecker (301) in den offenen Ringspalt (339) eingesteckt ist.

3. Steckkupplung nach Anspruch 1 oder 2, **dadurch gekennzeichnet, dass** das äußere und das innere Rohrstück (317,318) des Kupplungssteckers (301) jeweils mit einem ersten Ende mit dem ersten Verbindungflansch (309) verbunden sind und mit dem jeweils zweiten Ende mit einem Verbindungsring (321) verbunden sind, wobei zwischen dem inneren und dem äußeren Rohrstück ein Ringspalt ausgebildet ist, in welchem ein Isoliervakuum herrscht.

4. Steckkupplung nach Anspruch 3, **dadurch gekennzeichnet, dass** der Ringspalt über mindestens einen Strömungskanal (322) mit einem Isoliervakuum in der ersten Kryoleitung (303) verbunden ist.

5. Steckkupplung nach einem der vorstehenden Ansprüche, **dadurch gekennzeichnet, dass** der zweite Verbindungsflansch (324) mit einem Außenrohr (329) der zweiten Kryoleitung (304) verbunden ist.

6. Steckkupplung nach einem der vorstehenden Ansprüche, **dadurch gekennzeichnet, dass** das innere Rohrstück (333) mit dem äußeren Rohrstück (330) der Kupplungsdose (302) mittels eines Verbindungsrings (332) verbunden ist.

7. Steckkupplung nach einem der vorstehenden Ansprüche, **dadurch gekennzeichnet, dass** die Kupplungsdose (302) und der Kupplungsstecker (301) zueinander komplementäre Zentriermittel (344,346) aufweisen.

8. Steckkupplung nach einem der vorstehenden Ansprüche, **dadurch gekennzeichnet, dass** die Innenrohre (307,336) der ersten und zweiten Kryoleitung (303,304) im Bereich der Steckverbindung gegenüber dem Außenraum durch drei übereinandergeschichtete Isoliervakua thermisch isoliert sind.

9. Verladeeinrichtung für kryogene Fluide mit einer Steckkupplung (300) nach einem der Ansprüche 1 bis 8.

## Claims

1. The plug-in coupling for connecting a first with a second double-walled, vacuum-insulated cryogenic line (303, 304), which in each case have a media-conducting inner pipe (307, 336), wherein the plug-in coupling (300) comprises a coupling plug (301) and a coupling socket (302),
- wherein the coupling plug (301) has an inner and an outer pipe section (318, 317) as well as a first connecting flange (309) and is connected to the first cryogenic line (303),
- wherein the coupling socket (302) has an inner and an outer pipe section (333, 330) as well as a second connecting flange (324) and is connected to the second cryogenic line (304),
- wherein the outer pipe section (330) of the coupling socket (302) is welded onto the second connecting flange (324) and the end of the outer pipe section (330) remote from the connecting flange (324) is connected in a vacuum-tight manner to one end of the inner pipe section (333) of the coupling socket by means of a connecting ring (332),
- wherein between the inner and the outer pipe section (333, 330) of the coupling socket (302) an annular gap (339) open in the area of the second connecting flange (324) is formed, which is surrounded both on its inner circumference as well as its outer circumference by an insulating vacuum (338, 341), **characterized in that**
the other end of the inner pipe section (333) is welded onto a seal holder (334), that the media-conducting inner pipe (336) of the second cryogenic line (304) is welded onto the seal holder (334) and that
the seal holder (334) carries a seal (342), which is in contact with the coupling plug (301) in the assembled state of the plug-in coupling (300) and seals the media-conducting inner pipe (307, 336) of the first or second cryogenic line (303, 304).

2. A plug-in coupling according to claim 1, **characterized in that** the coupling plug (301) is inserted into the open annular gap (339) when the plug-in coupling (300) is assembled.

3. A plug-in coupling according to claim 1 or 2 **characterized in that** the outer and the inner pipe section (317, 318) of the coupling plug (301) are in each case connected at a first end to the first connecting flange (309) and are connected at the respective second end to a connecting ring (321), wherein between the inner and the outer pipe section, an annular gap is formed, in which an insulating vacuum prevails.

4. A plug-in coupling according to claim 3, **characterized in that** the annular gap is connected via at least one flow channel (322) to an insulating vacuum in the first cryogenic line (303).

5. A plug-in coupling according to any one of the preceding claims, **characterized in that** the second connecting flange (324) is connected to an outer pipe (329) of the second cryogenic line (304).

6. A plug-in coupling according to any one of the preceding claims, **characterized in that** the inner pipe section (333) is connected to the outer pipe section (330) of the coupling socket (302) by means of a connecting ring (332).

7. A plug-in coupling according to any one of the preceding claims, **characterized in that** the coupling socket (302) and the coupling plug (301) have complementary centering means (344, 346).

8. A plug-in coupling according to any one of the preceding claims, **characterized in that** the inner pipes (307, 336) of the first and second cryogenic line (303, 304) are thermally insulated in the area of the plug connection from the outside by three insulating vacuums layered on top of each other.

9. A loading device for cryogenic fluids with a plug-in coupling (300) according to any one of claims 1 to 8.

## Revendications

1. Raccord enfichable pour le raccordement d'une première et d'une deuxième conduites cryogéniques isolées par le vide à doubles parois (303, 304), qui comprennent chacune un tube interne conduisant des fluides (307, 336), dans lequel le raccord enfichable (300) comprend un connecteur mâle (301) et un connecteur femelle (302),
- dans lequel le connecteur mâle (301) comprend des éléments tubulaires interne et externe (318, 317) ainsi qu'une première bride de raccordement (309) et est relié avec la première conduite cryogénique (303),
- dans lequel le connecteur femelle (302) comprend des éléments tubulaires interne et externe (333, 330) ainsi qu'une deuxième bride de raccordement (324) et est relié avec la deuxième conduite cryogénique (304),
dans lequel l'élément tubulaire externe (330) du connecteur femelle (302) est soudé à la deuxième bride de raccordement (324) et l'extrémité, opposée à la bride de raccordement (324), de l'élément tubulaire externe (330), est reliée, au moyen d'une bague de raccordement (332), avec une extrémité de l'élément tubulaire interne (333) du connecteur femelle de manière étanche au vide,
dans lequel, entre les éléments tubulaires interne et externe (333, 330) du connecteur femelle (302), est formé un interstice annulaire (339) ouvert au niveau de la deuxième bride de raccordement (324), qui est entouré, aussi bien sur sa circonférence interne que sur sa circonférence externe, par un vide d'isolation (338, 341), **caractérisé en ce que**
l'autre extrémité de l'élément tubulaire interne (333) est soudé à un support de joint d'étanchéité (334),
le tube interne conduisant des fluides (336) de la deuxième conduite cryogénique (304) est soudé au support de joint d'étanchéité (334) et
le support de joint d'étanchéité (334) supporte un joint d'étanchéité (342) qui, lorsque le raccord enfichable (300) est assemblé, entre en contact avec le connecteur mâle (301) et qui étanchéifie les tubes internes conduisant des fluides (307, 336) de la première respectivement de la deuxième conduite cryogénique (303, 304).

2. Raccord enfichable selon la revendication 1, **caractérisé en ce que**, lorsque le raccord enfichable (300) est assemblé, le connecteur mâle (301) est enfiché dans l'interstice annulaire ouvert (339).

3. Raccord enfichable selon la revendication 1 ou 2, **caractérisé en ce que** les éléments tubulaires interne et externe (318, 317) du connecteur mâle (301) sont reliés chacun, avec une première extrémité, avec la première bride de raccordement (309) et, avec la deuxième extrémité, avec une bague de raccordement (321), dans lequel, entre l'élément tubulaire interne et l'élément tubulaire externe, est formé un interstice annulaire dans lequel règne un vide d'isolation.

4. Raccord enfichable selon la revendication 3, **caractérisé en ce que** l'interstice annulaire est relié, par l'intermédiaire d'un canal d'écoulement (322), avec un vide d'isolation dans la première conduite cryogénique (303).

5. Raccord enfichable selon l'une des revendications précédentes, **caractérisé en ce que** la deuxième bride de raccordement (324) est reliée avec un tube externe (329) de la deuxième conduite cryogénique (304).

6. Raccord enfichable selon l'une des revendications précédentes, **caractérisé en ce que** l'élément tubulaire interne (333) est relié avec l'élément tubulaire externe (330) du connecteur femelle (302) au moyen d'une bague de raccordement (332).

7. Raccord enfichable selon l'une des revendications précédentes, **caractérisé en ce que** le connecteur femelle (302) et le connecteur mâle (301) comprennent des moyens de centrages (334, 346) complémentaires entre eux.

8. Raccord enfichable selon l'une des revendications précédentes, **caractérisé en ce que** les tubes internes (307, 336) des première et deuxième conduites cryogéniques (303, 304) sont isolés thermiquement, au niveau du raccordement par enfichage, par rapport à l'extérieur, par trois vides d'isolation superposés.

9. Dispositif de chargement pour des fluides cryogéniques avec un raccord enfichable (300) selon l'une des revendications 1 à 8.
